# FASCICULE DE BREVET EUROPEEN

(11) **EP 1 814 331 B1**
(45) Date de publication et mention de la délivrance du brevet: **23.07.2008**
(21) Numéro de dépôt: 07101174.6
(22) Date de dépôt: 25.01.2007
(51) Int. Cl.: H04N 7/167, H04N 7/16, H04N 5/00

(54) **Procédé d'identification d'un opérateur autorisé au sein d'un décodeur de télévision numérique**
Identifizierungsverfahren eines autorisierten Operators in einem Dekoder für Digital-Fernseher
Identification method of an authorized operator in a digital television decoder

(30) Priorité: 25.01.2006 FR 0650262
(43) Date de publication de la demande: 01.08.2007
(73) Titulaire: Sagem Communications, 75512 Paris (FR)
(72) Inventeur: Pons, Michel, 95290 l'Isle-Adam (FR)
(74) Mandataire: Camus, Olivier Jean-Claude

(56) Documents cités:
- EP-A- 0 935 382
- EP-A- 1 564 994
- DE-U1- 9 217 379
- FR-A1- 2 866 773
- US-A1- 2003 056 110
- US-A1- 2003 118 188
- US-A1- 2004 086 127
- US-B1- 6 466 671
- CUTTS D J: "DVB CONDITIONAL ACCESS" ELECTRONICS AND COMMUNICATION ENGINEERING JOURNAL, INSTITUTION OF ELECTRICAL ENGINEERS, LONDON, GB, vol. 9, no. 1, février 1997 (1997-02), pages 21-27, XP000722905 ISSN: 0954-0695

## Description

### DOMAINE TECHNIQUE DE L'INVENTION

La présente invention a pour objet un procédé d'identification, au sein d'un décodeur de télévision numérique, d'un opérateur autorisé. L'invention a essentiellement pour but de proposer une solution permettant à un décodeur de télévision d'avoir la possibilité d'accéder au contenu de plusieurs opérateurs de télévision, tout en respectant une restriction d'accès à un opérateur particulier imposée par une carte de gestion des droits d'accès insérée dans ledit décodeur : l'opérateur auquel accède le décodeur correspond alors à l'opérateur auquel appartient la carte de gestion des droits, deux cartes différentes pouvant, dans l'invention, donner accès à deux opérateurs différents au moyen du même décodeur.

Le domaine de l'invention est, d'une façon générale, celui de la télévision numérique. Dans ce domaine, on associe le plus souvent au téléviseur un décodeur de télévision numérique. Ce dernier offre la possibilité à un abonné de recevoir une multitude de programmes, ou services, de télévision. L'abonné a préalablement acheté ou loué le décodeur à un commerçant, et a souscrit un abonnement qui lui permet de recevoir en clair, c'est à dire de façon non cryptée, un ensemble de services de télévision correspondant au contenu proposé par un opérateur. Cet ensemble de services dépend de la nature de l'abonnement que l'utilisateur a choisi, et il n'inclut pas nécessairement tous les services de télévision disponibles par l'intermédiaire de l'opérateur choisi.

En d'autres termes, lorsqu'un utilisateur choisit un abonnement, il achète un ensemble de droits d'accès qui lui autorise la réception en clair de certains services de télévision. Il est donc nécessaire de mettre en place des procédés de gestion de ces droits d'accès, afin de s'assurer d'une part qu'un abonné peut effectivement accéder aux services correspondant à son abonnement, et d'autre part, qu'il ne peut accéder :
- ni aux services de l'opérateur qui ne sont pas compris dans son abonnement ;
- ni aux services proposés par un autre opérateur. On dit alors que le décodeur est verrouillé sur un opérateur déterminé.

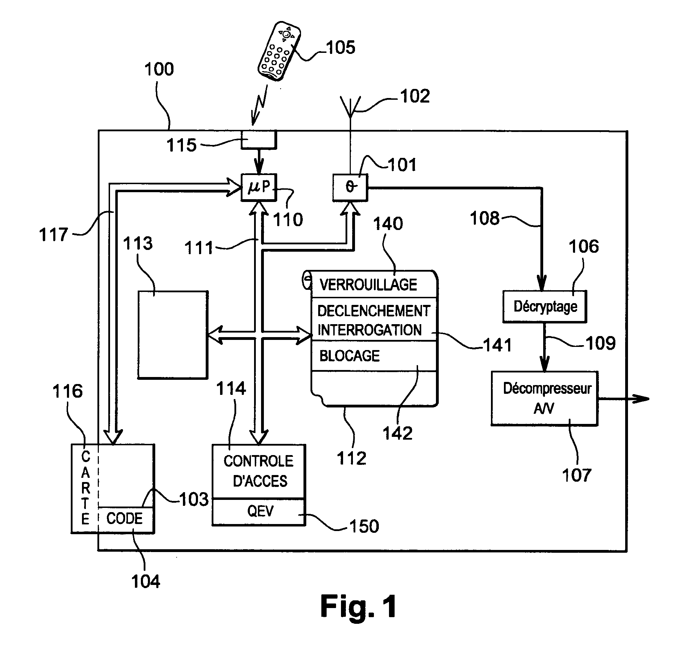

La figure 1 illustre de façon schématique le fonctionnement d'un décodeur de télévision, et plus particulièrement le système de verrouillage sur un opérateur particulier ayant mis le décodeur à disposition de l'utilisateur.

La figure 1 montre un décodeur 100 qui comporte un module de réception et de démultiplexage 101 de signaux télévisuels. Le module de réception 101 reçoit via une antenne 102 un flux d'informations, notamment de services de télévision. Le module de réception 101 pourrait être également connecté à un réseau de télévision câblée ou à un système de réception par satellite. Un microprocesseur 110 est relié au moyen d'un premier bus de communication bidirectionnel 111 à une mémoire de programmes 112, à une mémoire de données 113, à un module de contrôle d'accès 114, et au module de réception 101. Le microprocesseur 110 indique au module de réception 101 notamment quel service de télévision il doit extraire du flux d'informations qu'il reçoit par l'antenne 102.

Un capteur 115, dans cet exemple infrarouge, reçoit des signaux émis par une télécommande 105. Une cellule infrarouge du capteur 115 délivre un signal qui est transmis au microprocesseur 110. Les signaux numériques issus du module de réception et de démultiplexage 101 sont envoyés, via une première liaison unidirectionnelle 108 vers un module de décryptage 106, qui les transmet ensuite vers un décompresseur audio/vidéo 107 via une deuxième liaison unidirectionnelle 109.

La mémoire de données 113 est notamment destinée à mémoriser différentes informations, valeurs ou paramètres nécessaires au fonctionnement du décodeur. La mémoire de programmes 112 est notamment destinée à la gestion des différentes opérations qui peuvent intervenir pour mettre en oeuvre différentes fonctionnalités du décodeur. Elle comporte plusieurs applications, et pourra notamment en contenir certaines qui seront spécifiques à la mise en oeuvre du procédé selon l'invention. Ces applications seront détaillées par la suite. Dans d'autres modes de réalisation du décodeur 100, ces applications pourraient être remplacées par des circuits électroniques spécifiques.

Le bus de communication bidirectionnel 111 véhicule des signaux de commande, d'adresse ou de données. Il s'agit d'une représentation fonctionnelle ; toutes les autres liaisons représentées sont, dans la pratique, des bus de données qui assurent des échanges de données entre au moins deux éléments du décodeur décrit. Certaines de ces liaisons pourraient être intégrées dans le bus de communication bidirectionnel 111.

Dans le décodeur 100, on a prévu une ouverture pour introduire une carte 116, par exemple une carte de type carte à puce. Une telle carte comporte notamment un microprocesseur, une mémoire de données et une mémoire de programmes non représentés. Le décodeur est équipé d'une interface pour pouvoir échanger des informations avec la carte 116 via un deuxième bus de communication bidirectionnel 117. La carte 116 est, avec le module de contrôle d'accès 114, un élément essentiel dans le fonctionnement de la gestion des droits d'accès aux services de télévision.

La carte 116 gère notamment des messages dits messages d'administration de droits, ou EMM (pour Entitlement Management Message en anglais), et aussi des messages dits messages de contrôle de droits, ou ECM (pour Entitlement Control Message en anglais), qui sont des messages destinés au fonctionnement sécurisé du décodeur. Par ailleurs, la carte comporte une unité de mémoire 103 dans laquelle est mémorisée un code 104 ;le code 104 permet d'identifier l'opérateur proposant les différents services de télévision auxquels la carte donne accès.

### ARRIERE-PLAN TECHNOLOGIQUE DE L'INVENTION

Jusqu'à présent, chaque décodeur mis en location est programmé pour décrypter les services de télévision émis par un unique opérateur ;à cet effet, il existe une application particulière 140, dite application de verrouillage, de la mémoire de programmes 112 qui bloque le fonctionnement du décodeur sur le seul opérateur autorisé par ledit décodeur. Dans la quasi totalité des cas, le verrouillage est activé lors de la fabrication du décodeur.

A chaque nouvelle mise sous tension du décodeur, ou à chaque insertion d'une carte de contrôle dans le décodeur, une application particulière 141, dite application de déclenchement d'interrogation, de la mémoire de programmes 112 est exécutée. Cette application provoque l'exécution d'une fonction particulière 150, connue sous le nom de fonction QEV (pour Qui Etes-Vous ?) du module de contrôle d'accès 114 ;la fonction QEV permet d'interroger la carte de contrôle d'accès. Cette interrogation consiste en fait en une opération de comparaison entre un code représentatif de l'opérateur sur lequel le décodeur est verrouillé, et le code 104 représentatif de l'opérateur associé à la carte de contrôle. En cas d'égalité de ces deux codes, le décodeur peut fonctionner de manière habituelle, en décryptant les services de télévision du seul opérateur autorisé pour lesquels l'utilisateur a acquis des droits. Dans le cas contraire, une application particulière 142, dite application de blocage, de la mémoire de programmes 112 est activée ; elle empêche le décryptage de tout ou partie des services de télévision reçus par le décodeur.

Dans la plupart des cas, lorsque l'application de verrouillage 140 est active, l'opérateur dispose de la possibilité de déverrouiller son décodeur : une telle opération est réalisée par l'envoi d'un message de type EMM via un réseau de diffusion utilisé par l'opérateur sur lequel le décodeur est jusqu'alors verrouillé. La présence d'une carte 116 associée au bon opérateur, c'est à dire celui sur lequel le décodeur est verrouillé, est nécessaire lors de cette opération. L'opération de déverrouillage a pour effet que l'opération de comparaison entre le code représentatif de l'opérateur sur lequel le décodeur est verrouillé, et le code 104 représentatif de l'opérateur associé à la carte de contrôle n'est plus effectuée. Ainsi, une carte associée à tout autre opérateur que celui auquel est destiné le décodeur peut permettre d'accéder à différents services de télévision.

Dans l'état de la technique, on connaît l'enseignement du document technique EP-A-0 935 382 qui divulgue un procédé et un dispositif de configuration d'un récepteur/décodeur.

Dans l'état actuel des choses, comme on vient de le préciser, chaque décodeur de télévision est destiné à être verrouillé sur un opérateur préalablement déterminé, unique. Une difficulté apparaît alors pour une société, par exemple une compagnie de diffusion, qui, possédant déjà un premier opérateur, acquière au moins un deuxième opérateur: la société considérée dispose alors de deux parcs de décodeurs, chaque parc de décodeur étant destiné à être verrouillé sur un des deux opérateurs, les décodeurs destinés à être verrouillés sur le premier opérateur ne pouvant pas être verrouillés sur le deuxième opérateur, et vice-versa.

Un problème de gestion des stocks se pose alors pour un tel opérateur : il risque, par exemple, de disposer d'une quantité trop importante de décodeurs associés au premier opérateur, et d'une quantité insuffisante de décodeurs associés au deuxième opérateur. Une solution consisterait pour l'opérateur à déverrouiller, comme expliqué précédemment, les décodeurs du parc en surnombre, associés au premier opérateur, pour qu'ils puissent accepter et fonctionner avec des cartes dédiées à l'autre opérateur. Mais lever la fonction de verrouillage supprimerait un degré de sécurité : des cartes qui seraient dédiées ni au premier opérateur, ni au deuxième opérateur, pourraient alors librement être utilisées au sein du décodeur déverrouillé pour accéder à un opérateur différent de ceux gérés par la société considérée.

Par ailleurs, à ce jour, pour les fabricants de décodeurs fournissant une telle société, qui gère deux opérateurs différents, il est nécessaire de fabriquer deux types de décodeurs distincts, avec notamment des fonctions de verrouillage différentes pour les deux types de décodeur, et également des applications de configuration - définissant notamment les éléments graphiques, les fonctions spécifiques... de chaque opérateur - différentes pour les deux types de décodeur.

### DESCRIPTION GENERALE DE L'INVENTION

C'est un objet de l'invention de répondre à l'ensemble des problèmes qui viennent d'être mentionnés. Dans l'invention, on propose une solution permettant à une société gérant au moins deux opérateurs, de fournir l'ensemble de ses abonnés avec un unique et même décodeur, dit décodeur générique, apte à fonctionner pour le premier opérateur ou pour le deuxième opérateur. A cet effet, on prévoit, dans l'invention, d'adapter notamment le module de contrôle d'accès du décodeur pour que ce dernier interroge la carte de contrôle insérée dans le décodeur afin de déterminer si elle correspond à un des opérateurs autorisé par le décodeur considéré. On identifie ainsi un opérateur particulier, auquel appartient la carte de contrôle, qui doit être contenu dans une liste d'opérateurs autorisés par le décodeur. Une fois l'opérateur identifié, on prévoit avantageusement, dans l'invention, de configurer le décodeur de façon spécifique caractérisant l'opérateur identifié.

L'invention concerne donc essentiellement un procédé d'identification, au sein d'un décodeur de télévision numérique, d'un opérateur autorisé, ledit décodeur comportant notamment une mémoire de données, une mémoire de programmes et un module de contrôle d'accès pour vérifier qu'une carte de gestion des droits insérée dans le décodeur est une carte autorisée, ladite carte comportant, dans une unité de mémoire, une information relative à son appartenance à un opérateur particulier, le procédé comportant les différentes étapes consistant à :
- mémoriser dans la mémoire de données une liste d'opérateurs autorisés, ladite liste comportant au moins un premier opérateur et un deuxième opérateur;
- contrôler, au moyen du module de contrôle d'accès, que l'opérateur particulier auquel appartient la carte est un des opérateurs de la liste d'opérateurs autorisés;
caractérisé en ce que le procédé comporte l'étape supplémentaire consistant à :
- seulement dans le cas où l'opérateur particulier a été Identifié comme étant un opérateur autorisé, autoriser un fonctionnement habituel du décodeur et verrouiller le fonctionnement du décodeur sur ledit opérateur autorisé.

Le procédé d'identification selon l'invention peut également présenter, outre les caractéristiques principales énoncées dans le paragraphe précédent, une ou plusieurs des caractéristiques secondaires suivantes :
- l'étape de contrôle au moyen du module de contrôle d'accès comporte les différentes opérations consistant à :
   - provoquer le déclenchement, au moyen d'une application spécifique de la mémoire de programmes, d'une fonction d'interrogation d'identité gérée par le module de contrôle d'accès;
   - exécuter ladite fonction d'interrogation d'identité en sélectionnant le premier opérateur autorisé, ladite fonction d'interrogation d'identité consistant à comparer l'opérateur sélectionné à l'opérateur auquel appartient la carte ;
   - répéter, tant que la comparaison n'a pas abouti à une égalité, l'opération précédente en sélectionnant chaque autre opérateur autorisé mémorisé dans la mémoire de données ;
   - le procédé comporte l'étape supplémentaire consistant à sélectionner dans la mémoire de données et/ou dans la mémoire de programmes, une configuration particulière du décodeur associée à l'opérateur autorisé ayant abouti à une égalité lors de l'opération de comparaison ;
   - le procédé est mis en oeuvre automatiquement à chaque mise sous tension du décodeur ;
   - le procédé est mis en oeuvre automatiquement lors d'une première utilisation du décodeur.

L'invention et ses différentes applications seront mieux comprises à la lecture de la description qui suit et à l'examen des figures qui l'accompagnent.

### BREVE DESCRIPTION DES FIGURES

Les figures ne sont présentées qu'à titre indicatif et nullement limitatif de l'invention.
- à la figure 1, déjà décrite, une représentation schématique d'un décodeur de l'état de la technique et de son principe de verrouillage sur un opérateur;
- à la figure 2, une représentation schématique d'un décodeur conçu pour la mise en oeuvre d'un exemple de procédé selon l'invention;
- à la figure 3, un organigramme illustrant un exemple de mise en oeuvre du procédé selon l'invention.

### DESCRIPTION DES FORMES DE REALISATION PREFEREES DE L'INVENTION

Les éléments apparaissant sur différentes figures conservent, sauf précision contraire, les mêmes référence.

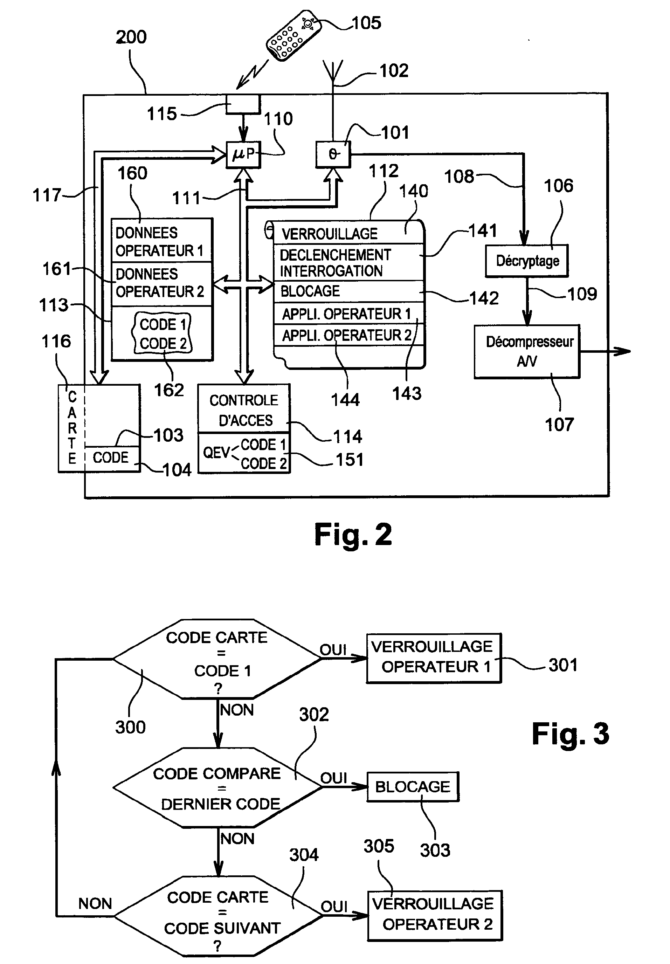

La figure 2 montre un décodeur 200 apte à exécuter un exemple de mise en oeuvre du procédé selon l'invention. Les différents éléments présents dans le décodeur décrit en référence à la figure 1 sont présents dans le décodeur selon l'invention; on retrouve ainsi : le module de réception et de démultiplexage 101, l'antenne 102, le microprocesseur 110, le premier bus de communication bidirectionnel 111, la mémoire de programmes 112, la mémoire de données 113, le module de contrôle d'accès 114, le capteur 115, la télécommande 105, la première liaison unidirectionnelle 108, le module de décryptage 106, le décompresseur audio/vidéo 107, la deuxième liaison unidirectionnelle 109, la carte 116 et son unité de mémoire 103, et le deuxième bus de communication bidirectionnel 117. Les différences essentielles entre le décodeur 200 et le décodeur 100 résident dans les différentes applications de la mémoire de programme 112, du contenu de la mémoire de données 113, et des fonctions exécutées par le module de contrôle d'accès 114.

Un exemple de mise en oeuvre de l'invention est à présent plus particulièrement détaillé : dans cet exemple, on suppose qu'une société gère deux opérateurs distincts. On prévoit alors de mémoriser, dans la mémoire de programmes 112 du décodeur 200, une première série d'applications 143 spécifiques au premier opérateur, et une deuxième série d'applications 144 spécifiques au deuxième opérateur. Les séries d'applications 143 et 144 sont par exemple constituées d'applications interactives spécifiques à l'opérateur auquel elles sont associées. De la même façon, on prévoit de mémoriser, dans la mémoire de données 113 du décodeur 200, une première série de données 160 spécifiques au premier opérateur, et une deuxième série de données 161 spécifiques au deuxième opérateur. Les séries de données 160 et 161 sont par exemple constituées d'éléments visuels de type logos, chartes graphiques... qui permettent à un utilisateur d'identifier rapidement l'opérateur qu'ils reçoivent. Par ailleurs, la mémoire de données comporte une liste 162 d'opérateur autorisés par le décodeur 200. Concrètement, la liste 162 comporte différents codes, chaque code correspondant à un opérateur dont la réception et les différentes opérations de décryptage sont autorisées par le décodeur considéré. Dans l'exemple, un premier code "code 1" et un second code "code 2", associés respectivement au premier opérateur autorisé et au deuxième opérateur autorisé, constituent la liste 162.

Dans le procédé selon l'invention, lorsque l'application 141 de déclenchement d'interrogation est activée, par exemple suite à la mise sous tension du décodeur 200 ou suite à l'introduction de la carte 116, une fonction d'interrogation 151 du module de contrôle d'accès 114 est exécutée. La fonction d'interrogation 151 est une fonction de type QEV. Son exécution se déroule comme représenté dans l'organigramme de la figure 3 : dans une première étape de décision 300, la fonction 151 réalise une opération de comparaison entre le code 104 de la carte 116 et le premier code de la liste 162. Si il y a égalité entre ces deux codes, on a identifié le premier opérateur comme l'opérateur à associer au décodeur 200. Le décodeur peut alors adopter un fonctionnement habituel en procédant aux opérations de décryptage autorisées par la carte pour les services de télévision émis par le premier opérateur. Dans l'exemple décrit, on procède alors, dans une étape 301, à une opération de verrouillage, au moyen de l'application 140, du décodeur 200 sur le premier opérateur. L'opération de verrouillage est, dans cet exemple, accompagnée d'une opération bloquant l'accès à la deuxième série d'applications 144, et l'accès à la deuxième série de données 161 ; dans certains exemples, on peut choisir de provoquer l'effacement de la deuxième série d'applications et de la deuxième série de données.

S'il n'y a pas égalité entre le code 104 de la carte 116 et le premier code de la liste 162, on passe alors à une étape de décision 302 dans laquelle on vérifie si le code qui vient d'être comparé au code 104 est le dernier code de la liste 162.
Dans l'affirmative, on déduit que le code 104 de la carte 116 ne correspond à aucun des codes de la liste 162, et que la carte 116 n'appartient pas à un opérateur autorisé par le décodeur 200. On procède alors, dans une étape 303, à une opération de blocage du décodeur 200, par exemple en exécutant l'application de blocage 142.
Dans la négative, on procède à une étape suivante 304 de décision, dans laquelle la fonction 151 réalise une opération de comparaison entre le code 104 de la carte 116 et le code suivant, dans la liste 162, le code qui vient d'être comparé au code 104. Si il y a égalité entre ce code suivant - uniquement le deuxième code dans l'exemple détaillé- et le code 104 de la carte 116, on a identifié le deuxième opérateur comme l'opérateur à associer au décodeur 200. Le décodeur 200 peut alors adopter un fonctionnement habituel en procédant aux opérations de décryptage autorisées par la carte pour les services de télévision émis par le deuxième opérateur. Dans l'exemple décrit, on procède alors, dans une étape 305, à une opération de verrouillage, au moyen de l'application 140, du décodeur 200 sur le deuxième opérateur. L'opération de verrouillage est, dans cet exemple, accompagnée d'une opération bloquant l'accès à la première série d'applications 143, et l'accès à la première série de données 160 ; dans certains exemples, on peut choisir de provoquer l'effacement de la première série d'applications et de la première série de données. En cas d'inégalité entre le code suivant et le code 104 de la carte 116, le procédé est repris au niveau de l'étape de décision 302.

La fonction d'interrogation 151 diffère de la fonction d'interrogation 150 de l'état de la technique dans la mesure où elle réalise, tant qu'aucune égalité n'est apparue, une opération de comparaison entre le code 104 de la carte 116 et chacun des codes de la liste d'opérateurs autorisés 162. On dispose ainsi d'un décodeur capable de s'adapter pour permettre la réception, en fonction de la carte qu'il reçoit, d'un opérateur particulier associé à la carte considérée.

## Revendications

1. Procédé d'identification, au sein d'un décodeur (200) de télévision numérique, d'un opérateur autorisé, ledit décodeur comportant notamment une mémoire de données (113), une mémoire de programmes (112) et un module de contrôle d'accès (114) pour vérifier qu'une carte de gestion des droits (116) insérée dans le décodeur est une carte autorisée, ladite carte comportant, dans une unité de mémoire (103), une information (104) relative à son appartenance à un opérateur particulier, le procédé comportant les différentes étapes consistant à :
- mémoriser dans la mémoire de données une liste (162) d'opérateurs autorisés, ladite liste comportant au moins un premier opérateur (code 1) et un deuxième opérateur (code 2);
- contrôler, au moyen du module de contrôle d'accès, que l'opérateur particulier auquel appartient la carte est un des opérateurs de la liste d'opérateurs autorisés;
**caractérisé en ce que** le procédé comporte l'étape supplémentaire consistant à :
- seulement dans le cas où l'opérateur particulier a été identifié comme étant un opérateur autorisé, autoriser un fonctionnement habituel du décodeur et verrouiller (301 ; 305) le fonctionnement du décodeur sur ledit opérateur autorisé.

2. Procédé selon la revendication précédente **caractérisé en ce que** l'étape de contrôle au moyen du module de contrôle d'accès comporte les différentes opérations consistant à :
- provoquer le déclenchement, au moyen d'une application spécifique (141) de la mémoire de programmes, d'une fonction d'interrogation d'identité (151) gérée par le module de contrôle d'accès ;
- exécuter (300) ladite fonction d'interrogation d'identité en sélectionnant le premier opérateur autorisé, ladite fonction d'interrogation d'identité consistant à comparer l'opérateur sélectionné à l'opérateur auquel appartient la carte ;
- répéter (304), tant que la comparaison n'a pas abouti à une égalité, l'opération précédente en sélectionnant chaque autre opérateur autorisé mémorisé dans la mémoire de données.

3. Procédé selon la revendication 2, **caractérisé en ce qu'**il comporte l'étape supplémentaire consistant à sélectionner dans la mémoire de données et/ou dans la mémoire de programmes, une configuration particulière (143 ;144 ;160 ;161) du décodeur associée à l'opérateur autorisé ayant abouti à une égalité lors de l'opération de comparaison.

4. Procédé selon l'une au moins des revendications précédentes **caractérisé en ce qu'**il est mis en oeuvre automatiquement à chaque mise sous tension du décodeur.

5. Procédé selon l'une au moins des revendications 1 à 3 **caractérisé en ce qu'**il est mis en oeuvre automatiquement lors d'une première utilisation du décodeur.

## Claims

1. A method of identification within a digital television decoder (200), of an allowed broadcaster, the said decoder containing in particular a data memory (113), a programmes memory (112) and an access control module (11A) to check that an entitlement management card (116) inserted in the decoder is an allowed card, the said card containing, in a memory unit (103), information (104) relating to its ownership by a specific broadcaster, the process including several different steps consisting in :
- storing in the data memory a list (162) of allowed broadcasters, which list includes at least a first broadcaster (code 1) and a second broadcaster (code 2);
- controlling, by means of the access control module, that the specific broadcaster owning the card is one of the broadcasters on the allowed list;
**characterized in that** the process includes the additional step of:
- only in circumstances where the specific broadcaster has been identified as an allowed broadcaster, allowing a standard working of the decoder and locking (301 ; 305) the working of the decoder onto the said allowed broadcaster.

2. A method according to the previous claim, **characterized in that** the control step by means of the access control module comprises several operations consisting in :
- starting up, by means of a specific application (141) of the programmes memory, an identity interrogatory function (151) managed by the access control module;
- performing (300) the said identity interrogatory function by selecting the first allowed broadcaster, the said identity interrogatory function consisting in comparing the selected broadcaster to the broadcaster to whom the card belongs;
- repeating (304), in so far as the comparison had not found a match, the previous operation by selecting each other allowed broadcaster listed in the data memory.

3. A method according to claim 2, **characterized in that** it includes the additional step consisting in choosing from the data memory and/or from the programmes memory, a specific configuration (143 ; 144 ; 160 ; 161) of the decoder linked to the allowed broadcaster having led to an equality during the comparison process.

4. A method according to at least one of the previous claims 1 to 3 **characterized in that** it starts up automatically every time the decoder is switched on.

5. A method according to at least one of the abovementioned claims **characterized in that** it starts up automatically at the first operation of the decoder.

## Patentansprüche

1. Verfahren zur Identifizierung eines zugelassenen Fernsehbetreibers innerhalb eines digitalen Fernsehdecoders (200), wobei der besagte Decoder vor allem einen Datenspeicher (113), einen Programmspeicher (112) und ein Modul für die Zugriffskontrolle (114) enthält, um zu prüfen, ob eine Karte zur Verwaltung der Rechte (116), die in den Decoder eingeführt wurde, auch eine zugelassene Karte ist, wobei die besagte Karte in einer Speichereinheit (103) eine Information (104) in Bezug auf ihre Zugehörigkeit zu einem bestimmten Fernsehbetreiber enthält, und das Verfahren die verschiedenen Schritte enthält, die darin bestehen:
eine Liste (162) an zugelassenen Fernsehbetreibern im Datenspeicher abzulegen, wobei die besagte Liste zumindest einen ersten Fernsehbetreiber (Code 1) und einen zweiten Fernsehbetreiber (Code 2) enthält;
- anhand eines Moduls für die Zugriffskontrolle zu prüfen, ob der bestimmte Fernsehbetreiber, dem die Karte gehört, einer jener Fernsehbetreiber aus der Liste der zugelassenen Fernsehbetreiber ist;
**dadurch gekennzeichnet, dass** das Verfahren den zusätzlichen Schritt enthält, der darin besteht, dass:
- nur für den Fall, dass der bestimmte Fernsehbetreiber als ein zugelassener Fernsehbetreiber identifiziert worden ist, ein gewöhnlicher Betrieb des Decoders zugelassen wird, und der Betrieb des Decoders für den besagten zugelassenen Fernsehbetreiber verriegelt (301; 305) wird,

2. Verfahren nach dem vorherigen Anspruch, **dadurch gekennzeichnet, dass** der Kontrollschritt mittels Modul für die Zugriffskontrolle verschiedene Operationen enthält, die darin bestehen, dass:
- mittels einer Sonderanwendung (141) des Programmspeichers eine Funktion der Identitätsabfrage (151) ausgelöst wird, die vom Modul für die Zugriffskontrolle gesteuert wird;
- die besagte Funktion der Identitätsabfrage ausgeführt (300) wird, indem der erste zugelassene Fernsehbetreiber ausgewählt wird, wobei die besagte Funktion der Identitätsabfrage darin besteht, den ausgewählten Fernsehbetreiber mit dem Fernsehbetreiber zu vergleichen, dem die Karte gehört;
- die vorherige Operation mit der Auswahl aller anderen zugelassenen Fernsehbetreiber, die im Datenspeicher abgespeichert sind, solange wiederholt (304) wird, solange der Vergleich zu keiner Gleichheit geführt hat.

3. Verfahren nach Anspruch 2, **dadurch gekennzeichnet, dass** es den zusätzlichen Schritt enthält, der darin besteht, aus einem Daten- und/ oder Programmspeicher eine gesonderte Konfiguration (143, 144, 160, 161) des Decoders auszuwählen, die jenem zugelassenen Fernsehbetreiber zugeordnet wird, bei dem der Vergleich zu einem positiven Ergebnis geführt hat.

4. Verfahren nach zumindest einem der vorherigen Ansprüche, **dadurch gekennzeichnet, dass** es automatisch bei jedem Einschalten des Decoders angewandt wird.

5. Verfahren nach zumindest einem der Ansprüche 1 bis 3, **dadurch gekennzeichnet, dass** es automatisch bei einer ersten Verwendung des Decoders angewandt wird.
